# EUROPÄISCHE PATENTANMELDUNG

(11) **EP 3 017 905 A1**
(43) Veröffentlichungstag der Anmeldung: **11.05.2016**
(21) Anmeldenummer: 14192445.6
(22) Anmeldetag: 10.11.2014
(51) Int. Cl.: B23K 20/16

(54) **Verfahren zum Verbinden zweier flächiger Bauteile**

(71) Anmelder: MAGNA STEYR Engineering AG & Co KG, 8041 Graz (AT)
(72) Erfinder: Hofer, Bernhard, 8053 Graz (AT); Hörmann, Reinhard, 8151 Hitzendorf (AT); Karner, Werner, 8055 Graz (AT)
(74) Vertreter: Zangger, Bernd

(57) **Zusammenfassung**

Ein Verfahren zum Verbinden zweier flächiger Bauteile (1, 2), wobei zwischen den beiden Bauteilen (1, 2) eine reaktive Folie (3) angeordnet wird um einen dreilagigen Stapel (1, 2, 3) zu bilden, und dieser dreilagige Stapel (1, 2, 3) an einer ersten Position mittels einer Schweißvorrichtung (4, 5, 6, 7, 8, 9, 10) lokal geschweißt wird, wodurch die reaktive Folie (3) aktiviert wird, sodass eine flächige Verbindung der beiden Bauteile (1, 2) entsteht.

## Beschreibung

### Gebiet der Erfindung

Die vorliegende Erfindung betrifft ein Verfahren zum Verbinden zweier flächiger Bauteile.

### Stand der Technik

Für flächige Bauteile, wie beispielsweise Metallbleche, ist es bekannt, die beiden Bauteile mittels verschiedener Schweißverfahren miteinander zu verbinden. Dazu werden beispielsweise mittels Punktschweißverfahren eine Anzahl von Schweißpunkten über die Fläche der beiden Bauteile verteilt gesetzt um eine annähernd über die Fläche verteilte Verbindung der Bauteile zu erreichen.

Bekannt sind an sich zum Beispiel die Verfahren Widerstandspunktschweißen, Reibrührschweißen, elektromagnetisches Pulsschweißen, Schweißen nach dem Delta-Spot Verfahren oder Schweißen nach den RIVTAC-Verfahren.

Für eine sichere Verbindung der beiden Bauteile ist es erforderlich viele Schweißpunkte zu setzen, wodurch die erforderliche Fertigungszeit hoch ist. Zudem müssen die beiden Bauteile an allen Schweißpunkten für die Schweißvorrichtung zugänglich sein.

Insbesondere für die Verlötung von Elektronikbauteilen auf Leiterplatten ist der Einsatz von reaktiver Folie, auch Nanofolie genannt, bekannt. Die reaktive Folie wird beispielsweise zwischen dem Elektronikbauteil und der Leiterplatte platziert und mittels eines Stromimpulses über ein elektrisches Impulsgerät gezündet. Der Umgang mit einem elektrischen Impulsgerät ist sicherheitskritisch und für eine industrielle Fertigung wenig geeignet.

### Zusammenfassung der Erfindung

Es ist eine Aufgabe der Erfindung, ein Verfahren zum Verbinden zweier flächiger Bauteile anzugeben, dass eine rasche und prozesssichere Herstellung einer guten Verbindung zwischen den Bauteilen ermöglicht.

Die Lösung der Aufgabe erfolgt durch ein Verfahren zum Verbinden zweier flächiger Bauteile, wobei zwischen den beiden Bauteilen eine reaktive Folie angeordnet wird um einen dreilagigen Stapel zu bilden, und dieser dreilagige Stapel an einer ersten Position mittels einer Schweißvorrichtung lokal geschweißt wird, wodurch die reaktive Folie aktiviert wird, sodass eine flächige Verbindung der beiden Bauteile entsteht.

Erfindungsgemäß werden zwei flächige Bauteile über eine, natürlich ebenfalls flächige, reaktive Folie miteinander verbunden. Dabei erfolgt die Zündung der reaktiven Folie jedoch nicht, wie sonst üblich, über einen Stromimpuls der über aus den flächigen Bauteilen vorstehende Laschen in die reaktive Folie eingebracht werden muss, sondern über eine einfache lokale Schweißung, die bevorzugt mit einem üblichen, für Facharbeiter gewohnten Schweißgerät durchgeführt wird. Somit kann der Bereich in dem die reaktive Folie zündet üblicherweise nicht von einem Menschen erreicht werden, wodurch die Arbeitsplatzsicherheit erhöht wird. Dazu ist es nicht erforderlich eine große Anzahl von Fügepunkten herzustellen um eine flächige Verbindung der Bauteile zu erhalten.

Weiterbildungen der Erfindung sind in den abhängigen Ansprüchen, der Beschreibung sowie den beigefügten Zeichnungen angegeben.

Vorzugsweise erfolgt das lokale Schweißen durch Reibrührschweißen, elektromagnetisches Pulsschweißen, Widerstandspunktschweißen, Schweißen nach dem Delta-Spot Verfahren oder Schweißen nach den RIVTAC-Verfahren.

Beide Bauteile können aus Aluminium oder Stahl bestehen, oder auch ein Bauteil aus Aluminium der andere aus Stahl. Eines der Bauteile kann auch aus Kunststoff, insbesondere faserverstärktem Kunststoff, bestehen.

Bevorzugt wird zwischen zumindest einem der Bauteile und der reaktiven Folie ein Lot eingebracht.

Der zumindest dreilagige Stapel, umfassend die beiden Bauteile und die reaktive Folie, wird bevorzugt vor dem Schweißen in einen Konturspanner eingespannt. Der Konturspanner spannt die beiden flächigen Bauteile in einer Weise, die zumindest abschnittsweise der Kontur der beiden Bauteile folgt.

Besonders bevorzugt presst der Konturspanner die beiden Bauteile im Wesentlichen über die gesamte Fläche der reaktiven Folie aneinander.

Bevorzugt wird beim Schweißen der dreilagige Stapel durch einen Gegenhalter der Schweißvorrichtung gehalten.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Verfahrens zum Verbinden zweier flächiger Bauteile mittels Reibrührschweißen.
- Fig. 2: ist eine Darstellung entsprechend Fig. 1 jedoch mit einem Konturspanner.
- Fig. 3: ist eine schematische Darstellung eines erfindungsgemäßen Verfahrens zum Verbinden mittels elektromagnetischem Pulsschweißen.
- Fig. 4: ist eine schematische Darstellung eines erfindungsgemäßen Verfahrens zum Verbinden mittels Widerstandspunktschweißen.
- Fig. 5: ist eine schematische Darstellung eines erfindungsgemäßen Verfahrens zum Verbinden mittels Delta Spot Verfahren.
- Fig. 6: ist eine schematische Darstellung eines erfindungsgemäßen Verfahrens zum Verbinden mittels RIVTAC Schweißen.
- Fig. 7: ist eine schematische Darstellung eines konventionellen Verfahrens zum Verbinden zweier flächiger Bauteile.
- Fig. 8: ist eine schematische Darstellung eines erfindungsgemäßen Verfahrens zum Verbinden zweier flächiger Bauteile.
- Fig. 9: ist eine schematische dreidimensionale Darstellung eines erfindungsgemäßen Verfahrens zum Verbinden zweier flächiger Bauteile.
- Fig. 10: ist eine schematische Darstellung einer Ansicht in Richtung A gemäß Fig. 9.

### Detaillierte Beschreibung der Erfindung

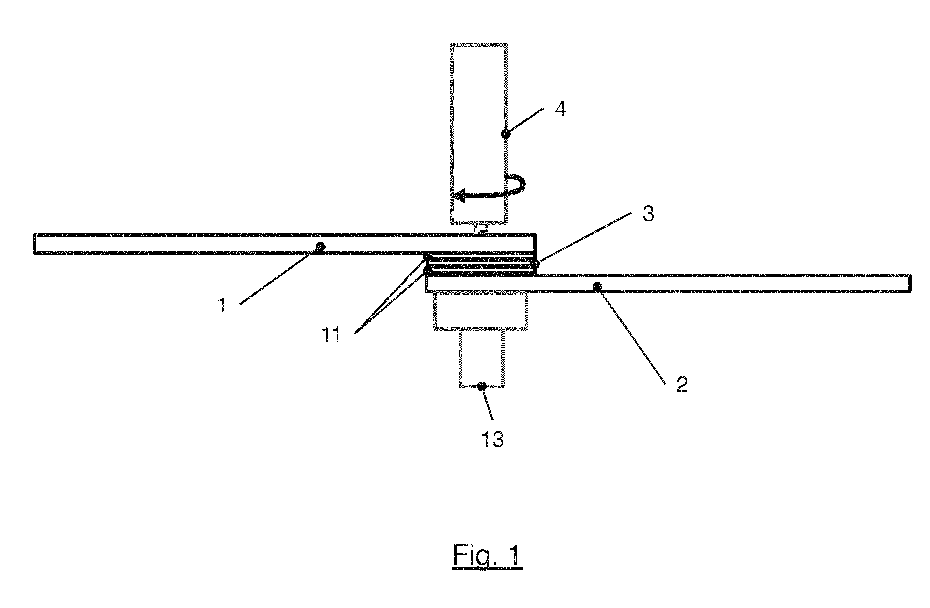

In den Fig. 1-6 ist jeweils ein erfindungsgemäßes Verfahren zum Verbinden zweier flächiger Bauteile 1, 2 mit Hilfe verschiedener an sich bekannter Schweißvorrichtungen dargestellt.

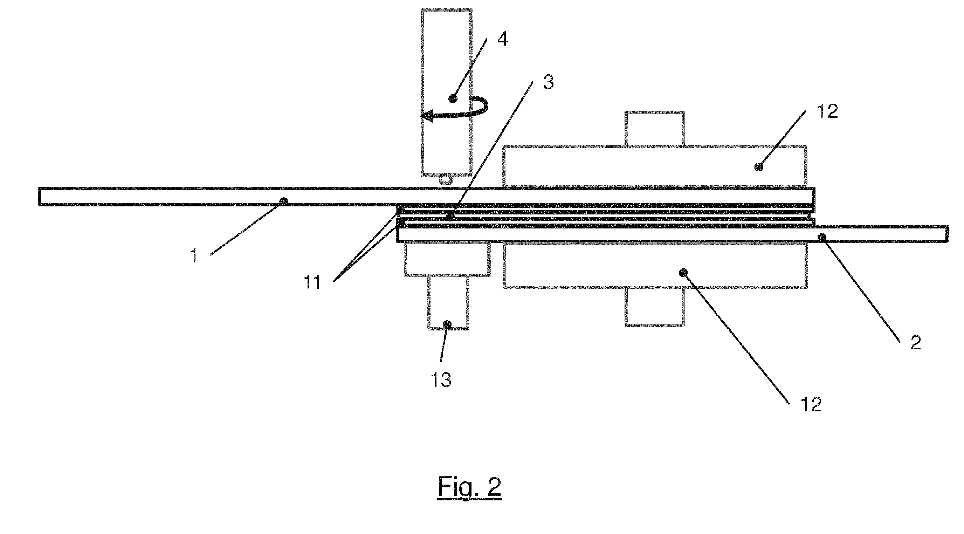

So zeigen Fig.1 und Fig. 2 eine Verbindung der Bauteile 1, 2 mittels Reibrührschweißen. Dazu wird mittels einer Reibrührschweißanlage 4 ein hoher Druck auf den Stapel bestehend aus erstem Bauteil 1 aus Aluminium, reaktiver Folie 3 und zweitem Bauteil 2 aus Stahl im Bereich der Fügestelle ausgeübt. Dazu wird ein Gegenhalter 13 verwendet. Durch den Druck und die Temperatur bei der Schweißung wird die reaktive Folie 3 gezündet. Der Druck gewährleistet die flächige Auflage der Bauteile 1, 2, die auf Grund der dünnen reaktiven Folie 3 erforderlich ist, um ein hochwertiges Verschweißen zu erzielen. Zwischen reaktiver Folie 3 und erstem Bauteil 1, sowie auch zwischen reaktiver Folie 3 und zweitem Bauteil 2, wird jeweils ein Lot 11 für das Schweißen verwendet.

Fig. 2 zeigt zusätzlich die Verwendung eines Konturspanners 12, der anschließend an die Fügestelle, die beiden Bauteile 1 und 2 entlang deren Konturen aneinander presst und somit den Druck für das Verschweißen entlang im Wesentlichen der gesamten Kontur der reaktiven Folie 3 gewährleistet.

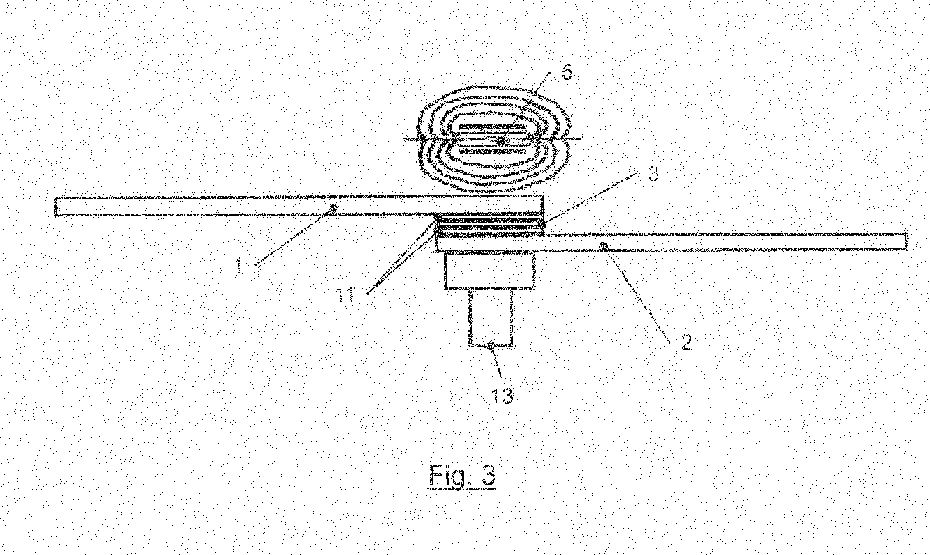

Fig. 3 ist eine Darstellung eines erfindungsgemäßen Verfahrens zum Verbinden mittels elektromagnetischem Pulsschweißen. Dabei werden die beiden Bleche 1, 2 mittels Magnetimpulsen der Magnetspule 5 auf Geschwindigkeiten über 200 m/s beschleunigt. Durch den hohen Aufpralldruck wird die reaktive Folie 3 gezündet.

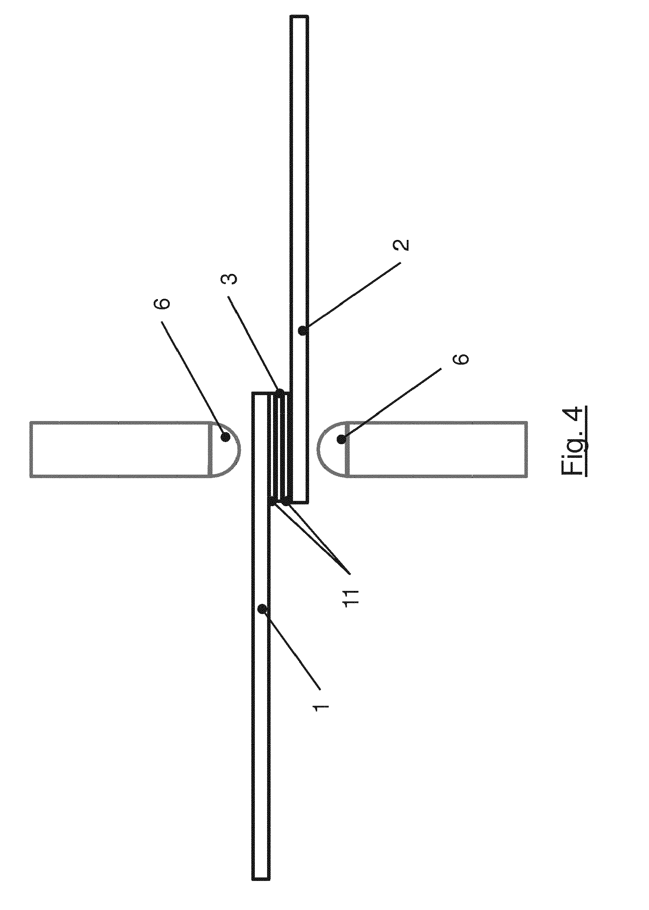

Fig. 4 zeigt ein erfindungsgemäßes Verfahren zum Verbinden mittels Widerstandspunktschweißen. Die beiden Bleche 1, 2 werden mittels Widerstandpunktschweißen miteinander verbunden. Zwischen den Bauteilen 1, 2 ist eine reaktive Folie 3 eingelegt. Der Stromfluss durch die beiden Elektroden 6 entzündet die reaktive Folie 3.

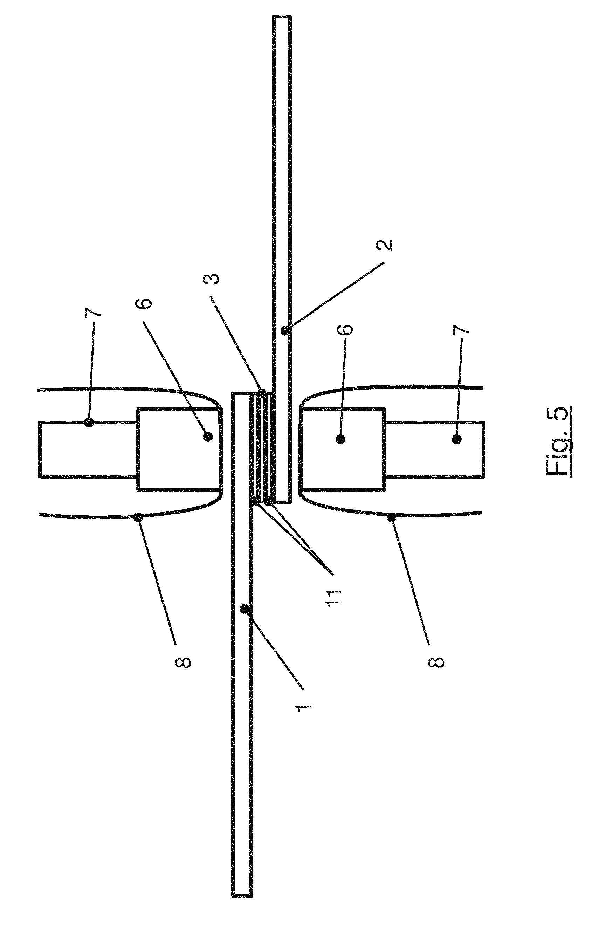

Fig. 5 zeigt schließlich ein erfindungsgemäßes Verfahren zum Verbinden mittels Delta-Spot Verfahren, einem Punktschweißverfahren mit umlaufendem Prozessband bekannt von der Firma Fronius. Dazu werden die Bauteile 1, 2 und die reaktive Folie 3 zwischen den beiden Elektroden 6 einer Delta-Spot Anlage 7 eingespannt und vor beiden Elektroden 6 jeweils ein Prozessband 8 verwendet.

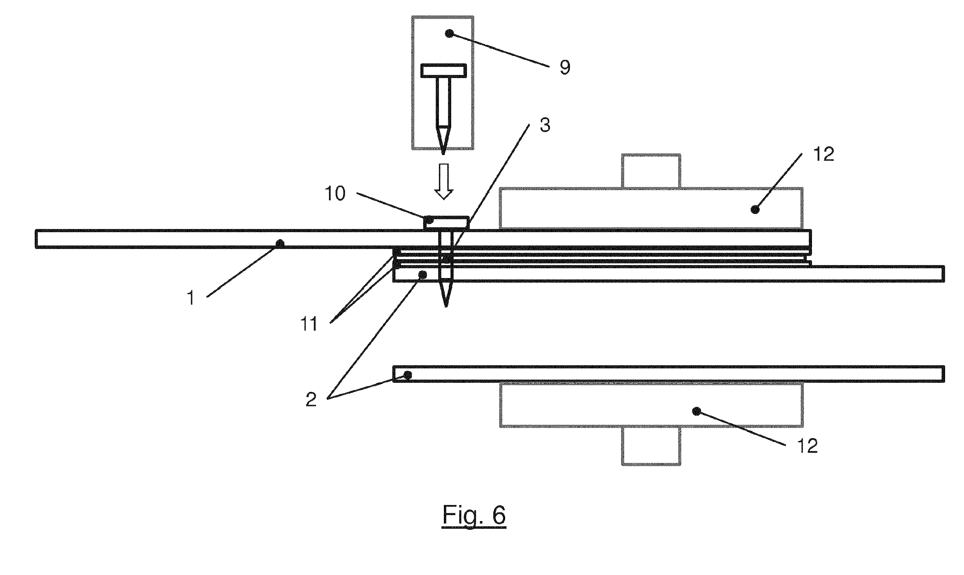

Fig. 6 ist eine schematische Darstellung eines erfindungsgemäßen Verfahrens zum Verbinden mittels RIVTAC Schweißen. Bei diesem Verfahren wird ein Bolzen 10 mit hoher Energie durch die mittels Konturspanner 12 gespannten Fügepartner 1, 2 geschossen und dient somit einerseits als mechanische Verbindung und andererseits als Zündquelle, durch den lokal erzeugten hohen Druck und hohe Temperatur, für die reaktive Folie 3. Diese Art der Verbindung eignet sich besonders gut bei nur einseitiger Zugänglichkeit, zum Beispiel bei Verbindung eines Blechs auf einem Profil.

Alle dargestellten Schweißverfahren können als Startpunkt und Zündungspunkt für eine längere Fügestrecke durch die reaktive Folie 3 verwendet werden.

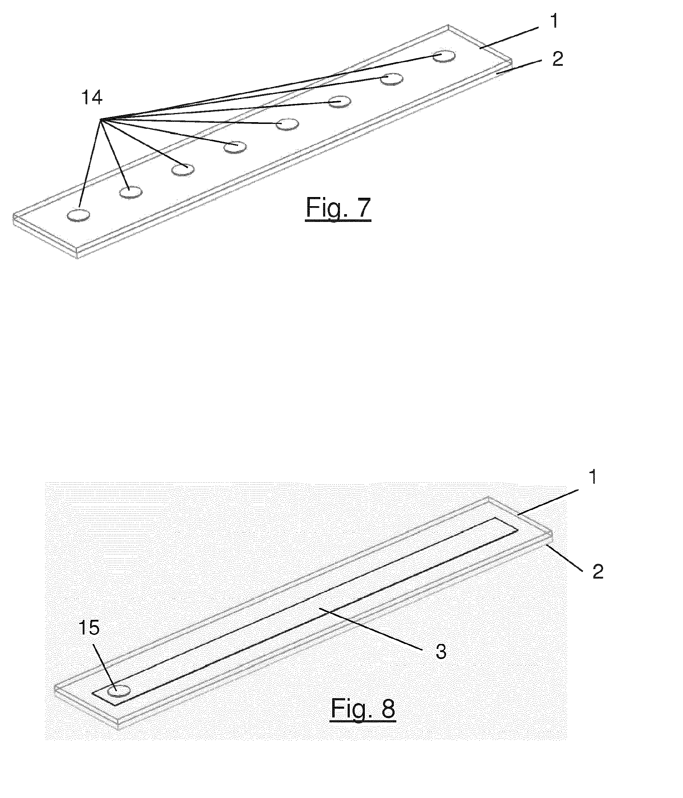

Fig. 7 zeigt eine Darstellung eines konventionellen, bekannten Verfahrens zum Verbinden zweier flächiger Bauteile 1, 2. Demgegenüber zeigt Fig. 8 ein erfindungsgemäßes Verfahren zum Verbinden zweier flächiger Bauteile 1,2. Im bekannten verfahren gemäß Fig. 7 werden die Bauteile 1, 2 mittels einer Vielzahl von Fügepunkten 14 aneinander gefügt. Im Verfahren gemäß Fig. 8 gibt es dagegen lediglich einen einzigen Startpunkt 15 zum Zünden der reaktiven Folie 3, mittels deren Reaktion die Bauteile 1, 2 entlang deren Fläche miteinander verschweißt werden.

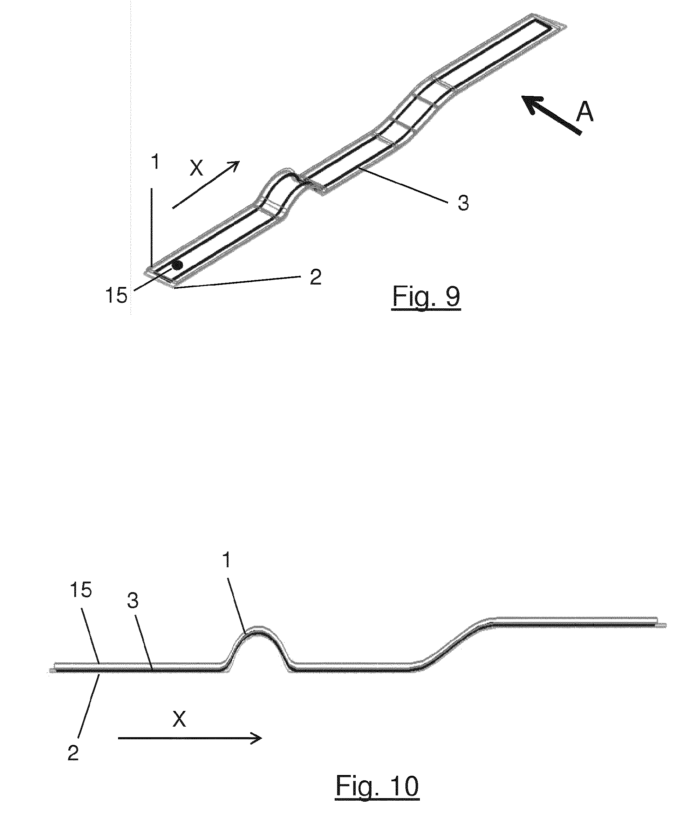

Fig. 9 zeigt schließlich eine dreidimensionale Darstellung der beiden flächigen Bauteile 1, 2 mit eingelegter reaktiver Folie 3, wobei zu erkennen ist dass die beiden Bauteile eine selbe Kontur aufweisen können. In einem Konturspanner kann das dichte Anliegen der Fügepartner während dem Fügeprozess sichergestellt werden.

Fig. 10 entspricht einer Ansicht in Richtung A gemäß Fig. 9. und zeigt die Ausbreitungsrichtung X der Reaktion der reaktiven Folie 3 und somit der Verschweißung nach einer Zündung durch lokales Schweißen am Startpunkt 15.

### Bezugszeichenliste

- 1: erster flächiger Bauteil
- 2: zweiter flächiger Bauteil
- 3: reaktive Folie
- 4: Reibrührschweißanlage
- 5: Magnetspule
- 6: Elektrode
- 7: Delta Spot Anlage
- 8: Prozessband
- 9: RIVTAC-Anlage
- 10: Bolzen
- 11: Lot
- 12: Konturspanner
- 13: Gegenhalter
- 14: Fügepunkt
- 15: Startpunkt Zündung

- X: Ausbreitungsrichtung

## Patentansprüche

1. Verfahren zum Verbinden zweier flächiger Bauteile (1, 2),
**dadurch gekennzeichnet, dass** zwischen den beiden Bauteilen (1, 2) eine reaktive Folie (3) angeordnet wird um einen dreilagigen Stapel (1, 2, 3) zu bilden, und dieser dreilagige Stapel (1, 2, 3) an einer ersten Position mittels einer Schweißvorrichtung (4, 5, 6, 7, 8, 9, 10) lokal geschweißt wird, wodurch die reaktive Folie (3) aktiviert wird, sodass eine flächige Verbindung der beiden Bauteile (1, 2) entsteht.

2. Verfahren nach Anspruch 1,
**dadurch gekennzeichnet, dass** das lokale Schweißen durch Reibrührschweißen, elektromagnetisches Pulsschweißen, Widerstandspunktschweißen, Schweißen nach dem Delta-Spot Verfahren oder Schweißen nach den RIVTAC-Verfahren erfolgt.

3. Verfahren nach zumindest einem der vorhergehenden Ansprüche,
**dadurch gekennzeichnet, dass** beide Bauteile (1, 2) aus Aluminium oder beide Bauteile (1, 2) aus Stahl oder ein Bauteil (1) aus Aluminium der andere Bauteil (2) aus Stahl oder einer der Bauteile (1, 2) aus Kunststoff, insbesondere faserverstärktem Kunststoff, bestehen.

4. Verfahren nach zumindest einem der vorhergehenden Ansprüche,
**dadurch gekennzeichnet, dass** zwischen zumindest einem der Bauteile (1, 2) und der reaktiven Folie (3) ein Lot (11) eingebracht wird.

5. Verfahren nach zumindest einem der vorhergehenden Ansprüche,
**dadurch gekennzeichnet, dass** der dreilagige Stapel (1, 2, 3) vor dem Schweißen in einen Konturspanner (12) eingespannt wird.

6. Verfahren nach Anspruch 5,
**dadurch gekennzeichnet, dass** der Konturspanner (12) die beiden Bauteile (1, 2) im Wesentlichen über die gesamte Fläche der reaktiven Folie (3) aneinander presst.

7. Verfahren nach zumindest einem der vorhergehenden Ansprüche,
**dadurch gekennzeichnet, dass** der dreilagige Stapel (1, 2, 3) durch einen Gegenhalter (13) der Schweißvorrichtung (4, 5, 6, 7, 8, 9, 10) gehalten wird.
